# EUROPEAN PATENT APPLICATION

(11) **EP 1 271 298 A2**
(43) Date of publication of application: **02.01.2003**
(21) Application number: 02254484.5
(22) Date of filing: 26.06.2002
(51) Int. Cl.: G06F 3/12

(54) **Portable wireless device printing**

(30) Priority: 29.06.2001 US 897697
(71) Applicant: Hewlett-Packard Company, Palo Alto, CA 94304 (US)
(72) Inventor: Berkema, Alan C., Granite Bay, CA 95746 (US); Morgan, Jeff, Cupertino, CA 95014 (US); Stoltz, Pat, San Diego, California 92129 (US); Fischer, Todd, Boise, Idaho 83702 (US)
(74) Representative: Powell, Stephen David

(57) **Abstract**

In a method for a portable device (102, 202, 302, 402) to obtain print data using a print device (106, 206, 306, 406), the portable device communicates a reference corresponding to the print data to the print device, with the reference comprising at least a location (114, 214, 314, 414) corresponding to the print data. The print device then communicates with the location to obtain the print data. Preferably, the portable device communicates with the print device via a wireless communications link (104, 204, 304, 404).

## Description

The invention relates to methods for printing documents, print data services, wireless portable devices, and web based services. More specifically, the present invention is related to methods for printing documents from portable devices and to print by reference communication methods for portable wireless device printing.

Traditional models for print operation comprise the "pushing" of content to a printer from a device. Most often, this involves a computer communicating with a print device. The communication may follow the format of a hard-wired connection interface, such as when a print device connects to a computer over a serial or parallel computer port. The communication might also follow a wireless connection such as that used for communication through an infrared light or radio frequency port. The basic operation in either case involves a device, e.g., a computer, linking to a print device, converting content into a format acceptable to the print device, and then transferring the data to the print device. As an example, a computer printing a Microsoft Word document addresses a printer, converts the document data and format information into a printer ready format, and pushes the print content to the printer. The communication between the printer and the device is formatted according to protocols. Print servers that typically comprise software resident or co-operative with a data generating program translate the data into a printer format and otherwise convert print job data into a protocol useful for control of the print job. Traditional printing models limit print operations in a number of disadvantageous manners. For example, one limitation relates to an inability of a printer to be used by devices lacking means for converting data into a printer ready format. While this limitation may potentially be overcome by equipping the device with a driver capable of translating the data, this is often impractical due to the number or size of drivers required to accommodate a variety of printers and print jobs. This is particularly true for devices having limited memory resources, such as portable devices like personal digital assistants
(PDAs), cell phones, wireless data terminals, laptop computers, and the like.

These devices are faced with still additional limitations in traditional printing models. Specifically, limited memory resources not only pose problems for storage of printer drivers, but likewise pose problems for storing content to be printed. Recent popularity of data files requiring relatively high memory resources such as graphics and photos, for instance, has further contributed to these problems. A proposed solution to these problems has been the addition of memory resources to the devices. This solution disadvantageously increases the cost, size, and weight of these devices, however. Additionally, even if these devices had the capacity to store more and larger data files for printing, they may face disadvantages associated with speed and reliability of communicating relatively large data files to a printer.
Advances in wireless communications have made these and other problems in the art more critical. Many portable devices such as cellular phones and PDA's can now communicate with one another as well as networked resources for widespread applications. By way of example, wireless communications may allow a user to connect with the Internet from a PDA or cell phone and surf websites. Content from these websites could be selected and downloaded to the portable device, and later communicated to a printer for printing. The problems discussed above, however, as well as others in the art have limited the practicality of such methods as the portable devices generally lack memory and communications resources for downloading, storing, and printing relatively large files.

Unresolved needs in the art therefore exist.

The present invention comprises a method for printing by reference in which portable devices are able to cause the printing of data stored at a remote location by passing a reference to the data to a print device for processing. In essence, an aspect of one embodiment the present invention thereby generally comprises steps through which print content is "pulled" to a print device from a location, in contrast to traditional print models that "push" the data to the print device. One embodiment of the method of the invention generally comprises the steps of establishing a wireless communication link between a portable device and a print device, communicating a reference from the portable device, the reference indicating at least a location having print content, and printing the print content with the print device. Preferably, the reference comprises at least a network address.

By way of additional summary, four example embodiments for practice of the method of the invention are presented. Each of these four example embodiments has in common that a portable device is used to initiate a print by reference process. In a first and preferred embodiment, the method further comprises communicating the reference from the portable device to the print device, and from the print device to a print server. The print server then communicates with the network location corresponding to the reference to obtain the print content, which is then communicated to the print device for printing. Preferably, additional steps of the print server discovering print device capabilities and formatting the print content according to those capabilities are comprised.
A second example embodiment of the method of the invention also comprises steps that make use of a print server. In this embodiment, the portable device communicates the reference to the print server, which then communicates with a network location corresponding to the reference. The print server obtains the print content from the network location, with the print device subsequently obtaining the print content for printing. As with the first example embodiment, the print server preferably discovers the print device capabilities and formats the print content according to these capabilities.

Third and fourth example method embodiments do not comprise use of print servers. In the third example embodiment, the method comprises communicating the reference to the print device, which then communicates with the location corresponding to the reference to obtain the print content for printing. In this embodiment, the print device may comprise internal print server functionality. In the fourth example embodiment, the reference comprises at least a network address corresponding to the print content, and the portable device communicates this network address to a network whereby a communications link is established between the portable device and the print content location. Print content from the location is then transmitted through the portable device to the print device for printing.

These and other embodiments of the method of the invention thereby solve many otherwise unresolved problems in the art in an elegant and novel manner. For example, portable devices are able to direct the printing of print content regardless of memory resources of the portable device. That is, because the data is not required to be downloaded and completely stored in a memory of the portable device, disadvantages associated with limited memory resources are minimized. Additionally, in method embodiments such as the first and second examples that comprise communicating between the print device and the print content location, the print content never passes through the portable device. Disadvantages associated with low speed communications from the portable device are therefore overcome. Finally, in method embodiments where print content is pulled to the print device, problems associated with pushing data through firewalls are resolved. These and many other advantages of the present invention will be appreciated by those knowledgeable in the art through the detailed method description that follows.

The above brief description sets forth broadly some of the more important features and advantages of the present disclosure so that the detailed description that follows may be better understood, and so that the present contributions to the art may be better appreciated. There are, of course, additional features of the disclosure that will be described hereinafter that form the subject matter of the claims appended hereto. In this respect, before explaining embodiments of the disclosure in detail, it is to be understood that the disclosure is not limited in its application to the details as set forth in the following description or illustrated in the drawings. The present invention may provide additional embodiments, as will be appreciated by those knowledgeable in the art. Also, it is to be understood that the phraseology and terminology employed herein are for description and not limitation.

FIG. 1 is a schematic useful for illustration of a first example embodiment of a method of the invention.

FIG. 2 is a schematic useful for illustration of a second example embodiment of a method of the invention.

FIG. 3 is a schematic useful for illustration of a third example embodiment of a method of the invention.

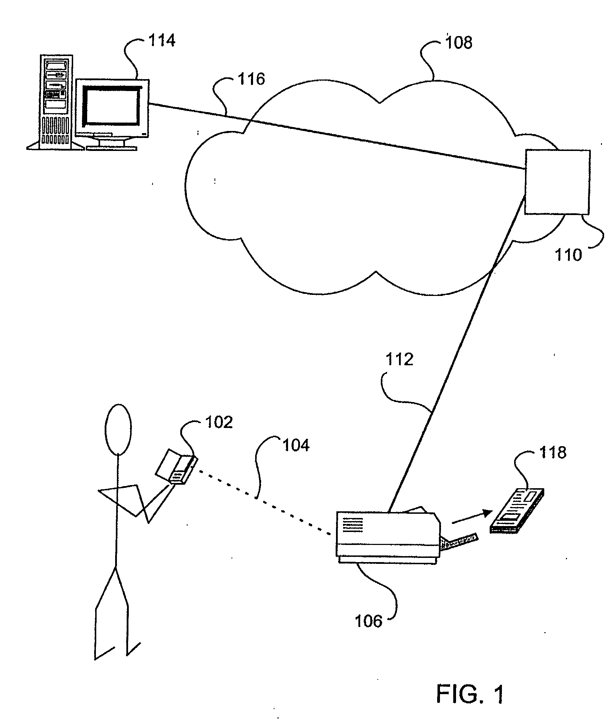

FIG. 4 is a schematic useful for illustration of a fourth example embodiment of a method of the invention.
Turning now to the drawings, FIG. 1 is a schematic useful in illustrating a first example embodiment of a method of the invention. In this embodiment, a portable wireless device such as a PDA 102 establishes a wireless communication link 104 with a print device 106. The communications link 104 established between the PDA 102 and the print device 106 preferably supports two-way dialogue between the devices. That is, the preferred communications link 104 will allow for both the PDA 102 and the print device 106 to send and receive data between one another. Data may be in any practical format, with digital data comprising discrete packets a preferred example. Once the link 104 has been established, the print device 106 preferably acknowledges the PDA 102 to provide confirmation that the link 104 is operable.

Wireless communication link 104 may be established using any practical wireless technology, with preferred examples comprising infrared light and radio frequency. Both the PDA 102 and print device 106 preferably comprise ports for communicating via the link 104. A preferred technology comprises a relatively low power radio frequency that has an operable range of less than about 10 meters. Protocols having other operable ranges may be useful for practice of the invention, with a range of less than about 300 meters an additional example. An example of a preferred commercially available wireless technology is the "Bluetooth" RF protocol that allows computer and other electronic devices to communicate over relatively short distances. Bluetooth is a wireless standard developed by a technology industry consortium made up of 3Com, Ericsson, IBM, Intel, Agere, Microsoft, Motorola, Nokia, and Toshiba with a mission of creating a standard wireless protocol. More information, including protocol specifications, can be obtained on the Bluetooth website: www.bluetooth.com, with the content available from this and linked websites incorporated herein by reference. The current Bluetooth protocol has an operable range of about 10 meters. Other example protocols suitable for practice within the scope of the invention that have available commercial support are those specified by IEEE 802.11 standard.

An additional subset of method steps of an embodiment of the invention comprise a discovery process by the client PDA 102 used to locate one or more print devices. In this subset of steps, the PDA 102 may communicate a discovery signal for locating available print devices within operable range of the PDA 102. Preferably, the discovery signal comprises location data for the PDA 102, which may be obtained through use of positioning tools or the like, with an example comprising satellite or beacon triangulation tools. A print device may respond to the discovery signal with information that includes the location of the print device, directions to get from the PDA 102 location to the print device, cost for using the print device; current wait time for the print device; capabilities of the print device such as color printing, two sided printing, paper types; and the like.

Further, a plurality of print devices may be within operable range of the PDA 102, in which case the embodiment will further comprise each of the plurality of print devices responding to the discovery signal with data that will allow the PDA user to choose between the print devices. By way of example, the user may choose a print device based on proximity, wait time, cost of use, capabilities such as two-sided or color printing, or the like.

Once the communications link 104 has been established between the PDA 102 and the print device 106, this first method example embodiment comprises a step of communicating a reference from the PDA 102 via the link 104 to the print device 106. "Reference" as used herein is intended to broadly refer to a data set. Preferably, a reference as practiced with the current invention comprises at least a network address corresponding to a network accessible location from which the desired print content is available. The reference may also comprise additional data. Also, the reference may further comprise an indicator or be presented in a protocol that will be recognized by a receiving device such as the print device 106 as indicating that a "print by reference" print job should be initiated. As an example, a reference may be communicated in a particular protocol, or may comprise a command, character string, syntax, or the like that when received will be recognized as a "print by reference" communication.
The PDA 102 may obtain the reference in any of a number of steps. For example, the PDA 102 may be connected via a cellular connection to the Internet, and may be used to surf websites. A website may be encountered having print content that is desired to be output, such as a product brochure. This print content may have a "reference" associated with it, with the reference obtained by the PDA 102 without obtaining all of the print content. In practice, the print content may have a "Print by Reference" or similar icon for selection that when selected communicates the reference. By way of additional example, a reference may be manually entered to the PDA 102, or may be received via a beacon.

The network address that the preferred reference comprises may be any suitable data string useful for identifying a location on a network. Examples comprise "pure" Internet protocol address strings, uniform resource locator ("URL") such as are used to identify locations on the worldwide web, and the like. By way of additional description, if a reference were obtained for obtaining print content from an Internet based location, the reference may comprise a URL Internet address. The reference used in the method of the invention may of course comprise more than a network location.

For example, additional data included within the reference may comprise information regarding the data to be printed, such as the file size, the number of pages, the format, the colors, the dates of creation, the application used to create the data, print instructions and settings for various printers, and the like. Other reference information may further comprise alternative access path information, security information such as encryption keys or instructions, access information, and the like. Additionally, a single reference may comprise a plurality of individual print content locations and information sets. In this manner a single reference could be communicated for printing from a plurality of print content locations. Preferably, a reference comprising additional information is provided as an XML (extensible markup language) tag including Meta information. For example, the XML tag may have syntax that permits inclusion of print job meta information, a list of references with each reference indicating a location of print content, and/or identification of a print server location of a server.
In this first example embodiment, the print device is preferably connectable to a network illustrated for convenience in FIG. 1 as a "cloud" 108, with a print server 110 accessible via the network 108. The print server 110 is shown in FIG. 1 as a "box" for illustration purposes. Those knowledgeable in the art will appreciate that the print server 110 in practice may comprise any of a number of processor based server devices, such as a computer, or may comprise a set of programmed instructions being executed by a processor based device.

Once the print device 106 has received the reference from the PDA 102, it establishes a server communications link 112 with the print server 110 over the network 108. Preferably, the print server 110 acknowledges the print device 106 over the server link 112 once established. Server link 112 may be established by any means as may be practical, including but not limited to wired and wireless communications. The print device 106 may have a network address for the print server 110 stored in a print device memory. Also, an additional step of an embodiment of the invention may comprise including a print server address and access information in the reference, and a step comprising the print device 106 examining the reference to determine the print server 110 address. Further, a plurality of print servers 110 may be operatively accessible over the network 108, with a corresponding plurality of addresses stored in the print device memory or comprised in the reference. The print device 106 may then establish the server link 112 with whichever of the plurality of the print servers 110 that may be preferred for reasons such as availability, congestion, proximity, or the like.

In the first example embodiment, the reference is passed from the print device 106 to the print server 110 over the server link 112 for resolution. "Resolution of a reference" as used herein is intended to broadly refer to general steps of processing the reference, which may generally include steps of extracting information from the reference and acting on that information. Resolution may comprise, by way of example, recognizing the reference as indicating that a print by reference print job should be initiated, examining the reference to determine data contained therein, extracting particular data from the reference such as a network address, and taking steps required to locate and obtain the desired print content corresponding to the reference. Accordingly, with reference to FIG. 1, after receiving the reference, the print server 110 will examine the reference to determine a network address for the location 114 having the print content stored thereon, and will communicate with the location 114 via a communications link 116 over the network 108.

It will be appreciated that the method may comprise steps of resolving the reference with other elements than with the print server 110. By way of example, the reference could be resolved by the print device 106, with only required information from the reference then transmitted to the print server 110. Or, the reference could be resolved by the PDA 102, with only required information then transmitted to the print device 106 and the print server 110. Additionally, the reference may be resolved by any combination of the PDA 102, the print device 106, and/or the print server 110, with each of the respective devices extracting a portion of the data of the reference and performing various steps using the thus extracted data.

The location having the desired print content available has been illustrated for example purposes in FIG. 1 as the computer 114. It will be appreciated by those knowledgeable in the art that the method of the invention can be practiced with a wide variety of "locations" having print content. By way of example, a preferred location comprises at least a file with a URL assigned thereto for access over the Internet. Thus the location as illustrated in FIG. 1 preferably comprises one or more data files stored in a memory of the computer 114.

Further embodiment steps comprise the print server 110 obtaining the print content from the location 114 over the communication link 116 and communicating the print content to the print device 106 for printing via the server link 112. Preferably, the steps of communicating the print content from the print server 110 to the print device 106 comprise a "pulling" of the content by the print device 106, as opposed to a "pushing" of the content from the server 110. By way of example, the print server 110 may create and assign a new URL to the print content, with this new URL indicated to the print device 106. The print device 106 could then "pull" the data from the new URL.

Further, additional steps of the print server 110 formatting the print content for the print device 106 are preferably comprised in the method of the invention. For this preferred print server functionality, the method of the invention may comprise additional preferred steps of obtaining print device 106 capabilities from the print device 106 via the server link 112. As used herein, the term "print device capabilities" is intended to broadly refer to information relating to the performance and specifications of a print device that may be required to format data for printing.

By way of example, print device capabilities as used herein may indicate what fonts and character sets a print device supports, what languages it supports, what sizes and types of materials may be printed on, what color and graphic capabilities, and the like. With knowledge of these print device capabilities, the print server 110 will be able to format the print content as may be desired for printing by the print device 106. Preferably, the print server 110 supports formatting of print content in formats that comprise at least HTML (hyper text markup language), XHTML (extensible hypertext markup language), PDF (portable document file), and US ASCII (American standard code for information interchange) formats. These formats are generally known in the art.

Print device capabilities may exist as a stand alone file that is passed from the print device 106 to the print server 110, may comprise information that is "appended" or added to the reference passed from the print device 106 to the print server 110, or may comprise information that is discovered by the print server 110 through a dialog with the print device 106 via the server linkage 112. By way of still an additional example, the print device 106 may pass an identifier such as a model number to the print server, which then may determine print device capabilities through steps of obtaining a profile stored locally or remotely over the network 108.

In a still additional preferred subset of steps of the method of the invention, the print server 110, the server link 112, the print device 106, the wireless link 104, and the PDA 102 are all provided with functionality such that the PDA 102 can display print job status information and can perform print job control functions. By way of example, an embodiment of the invention comprises steps of making a status indicator available to the PDA 102 during performance of the print by reference job. Upon inquiry, then, the user of the PDA 102 could learn for instance that the print content location 114 had been contacted, that the print content was in the process of transfer to the print server 110 or the print device 106, was in the process of formatting by the print server 110, or the like. Further, ratios of completion are preferably made available, so that for instance the PDA user can determine that the job is "20% completed", and the like. Examples of providing print job control functions comprise providing print job pause and print job cancel functionality from the PDA 102.

Through this first example embodiment of the invention, a document 118 is ultimately printed corresponding to print content residing at a location 114 that is remote from the PDA 102. Importantly, the print content has been printed without requiring storage in the memory resources of the PDA 102. Additionally, the print content is printed without ever passing "through" the PDA 102. Thus many of the problems in the art related to memory and communications resource limitations are thereby resolved.

Additionally, this first method embodiment provides important advantages in terms of obtaining print content through security mechanisms such as firewalls. In particular, it may be difficult to "push" data through firewalls. With reference to FIG. 1 by way of example, if a security firewall stood between the print device 106 and the network 108, problems may be encountered in directing print content from the network 108 to be printed at the print device 106 via a traditional "push" model. Through the first example embodiment, however, these problems would be solved as firewalls generally would allow for content to be "pulled" therethrough as occurs through the first example embodiment.

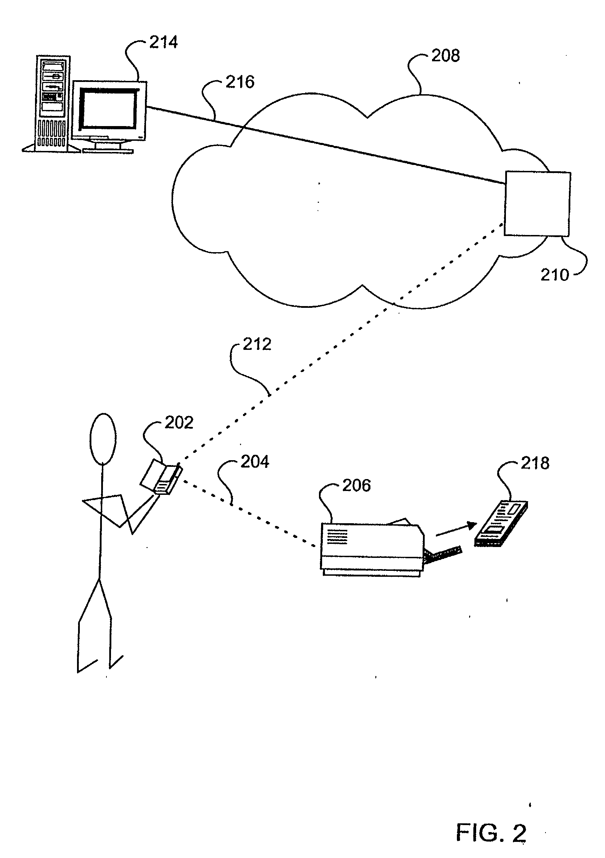

FIG. 2 is a schematic useful for illustration of a second example embodiment of the method of the invention. This second example embodiment is generally similar to the first example embodiment, with an important difference in that this example comprises steps of the print server 210 and the print device 206 communicating through the PDA 202. That is, this second embodiment is different than the first in that there is no "direct" communication between the print device 206 and the print server 210. This second embodiment may be preferred over the first if, for example, the print device 206 had the ability to communicate over short distances with the PDA 202, but was otherwise not operably connected to the network 208. As a further example, this example embodiment may be useful for practice with printers that are not network connected, but that have or may be equipped with a short-range communications portal for establishing a short range communications link with a portable device.

Because the first and second example embodiments have several steps and elements that are substantially similar to one another, description of these steps and elements may not be repeated in the same detail as was done for the first example embodiment for the sake of brevity. Accordingly, discussion of these elements and steps made in regards to the first example embodiment will be understood to apply to this second example embodiment as well.
In this second example embodiment, the PDA 202 establishes a wireless communications link 204 with the print device 206. The wireless link 204 is substantially the same as the link 104 described with reference to the first example embodiment, including its preferred elements and in particular the preferred Bluetooth protocol. Once the link 204 has been established, the print device 206 preferably acknowledges the PDA 202. This second example embodiment further comprises steps of the PDA 202 establishing a server communications link 212 with a print server 210. Preferably, the server link 212 comprises a wireless linkage such as an infrared or radio frequency protocol signal. The link 212 is preferably capable of relatively long range communications, with a preferred example comprising cellular protocol radio frequency. The print server 210 may be located by the PDA 202 through any of a number of method steps, with examples comprising determining a network address for the print server 210 from a reference, from a location stored in a memory of the print device 206, from a registry or list that is accessible over the network 208, from a search of the network 208, or the like.

This second example embodiment further comprises steps of transmitting a reference corresponding to the desired print content to a network accessible print server 210 over the link 212. It will be appreciated that the reference of this second example embodiment is substantially the same as the reference described in regards to the first example embodiment. That is, the reference preferably comprises at least a network address for a location where the desired print content available from, and may comprise additional information such as information regarding the nature of the print content, security information, access information, print server addresses, and the like. The reference further comprises an indicator to the print server 210 that a print by reference job is to be initiated.

The print server 210 resolves the reference in substantially the same manner as does the print server 110 as described in regards to the first example embodiment. That is, the print server 210 determines the network address of the location having the desired print content available, establishes a communications link 216 with the location, and obtains the desired print content. It will be appreciated that this second example embodiment may further comprise additional steps of print server 210 reference resolution as described in regards to the print server 110 of the first example embodiment.
Likewise, it will be appreciated that this example embodiment may comprise additional steps of print content formatting by the print server 210 as described with reference to the print server 110 of the first example embodiment. In particular, this second example may preferably comprise steps of PDA 202 obtaining print device capabilities for print device 206 via the wireless link 204, and transmitting this profile via the server link 212 to the print server 210. It will be understood that "print device capabilities" as used in regards to this second example embodiment is intended to be consistent with use in regards to the first example. That is, printer capabilities generally comprise specifications for the print device 206 that will allow the print server 210 to format the print content for printing. Additionally, print device capabilities may be appended or inserted into the reference.

Also, this example embodiment may comprise transmitting print device capabilities stored in a memory of the print device 206, or may comprise steps of performing a discovery process by the PDA 202 over the link 204. By way of additional example, steps of obtaining an identifier for the print device 206 such as a print device model number over the link 204 may be comprised, followed by steps of using the identifier to obtain a print device profile from a remote source over the network 208.

Once formatted for printing by the print server 210, the print content is preferably streamed by the print server through the PDA 202 via the server link 212, and subsequently over the link 204 to the print device 206 for ultimate printing of a document 218. Preferably, the print content is streamed in a manner such that it does not require memory resources of the PDA 202. Or, streaming may occur using data flow control steps that at least minimize use of the PDA 202 memory resources. For example, data may be obtained in portions, with a single portion buffered in the PDA 202 memory and then streamed on to the print device 206.

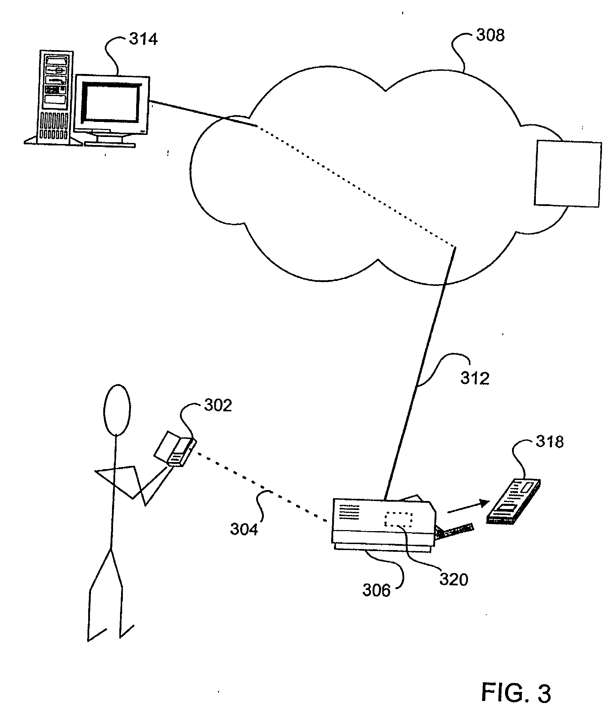

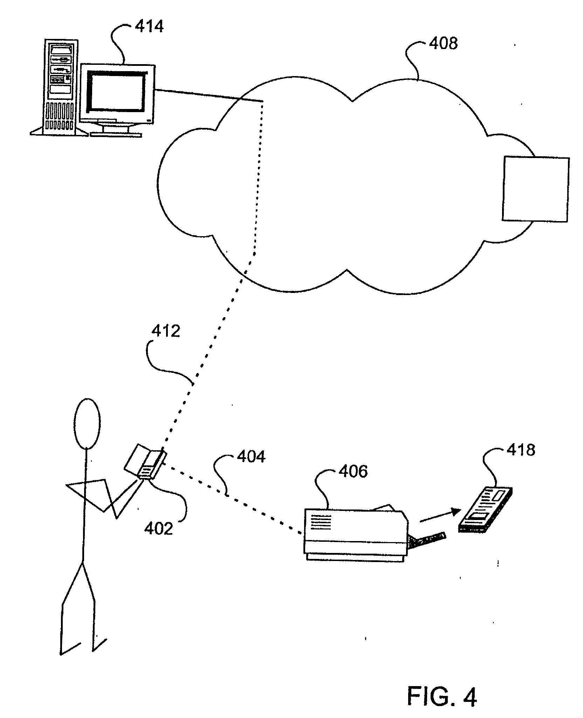

Also, the print content data is preferably communicated to the PDA 202 via a pulling mechanism that comprises the PDA 202 requesting or otherwise getting the content from the server 210, as opposed to the server 210 pushing the content to the PDA 202. Like the first example embodiment, this second embodiment may also further comprise additional steps of providing functionality between the print server 210, the PDA 202, the print device 206, the server link 212, and the wireless link 204 to allow for status update and print process control to the PDA 202. For example, additional embodiment steps comprise providing functionality that allows the PDA 202 to report print job status such as completion portion, and to maintain print job control such as job pause and cancel capabilities.
Third and fourth example embodiments are similar to the first and second examples, with an important difference in the steps for communicating print content to the print device. As illustrated by FIGS. 3 and 4, respectively, these third and fourth example embodiments instead generally comprise direct communication between a print device 206 and the network location 214 having the desired print content, and between the PDA 302 and the network location 314.

It will be appreciated that many of the steps and elements of these third and fourth example embodiments are substantially the same as those of the first and second example embodiments, and will therefore not be described in great detail. It will therefore further be appreciated that the description of various steps and elements, including but not limited to preferred embodiments, made in regards to the first and second example embodiments likewise apply to these third and fourth embodiments.

FIG. 3 is useful in illustrating the third example embodiment. This embodiment comprises steps of establishing a wireless link 304, which most preferably comprises a short range radio frequency link such as a Bluetooth protocol link, between a PDA 302 and a print device 306. Preferably, the print device 306 acknowledges the PDA 302 over the link 304 once established. Further steps comprise communicating a reference from the PDA 302 over the link 304 to the print device 306. The reference is substantially the same in this third embodiment as that described in regards to the first and second embodiments. In general, it preferably comprises at least a network address corresponding to desired print content, and may comprise additional data such as meta-tags providing access, security, and print content information, and further preferably comprises an indicator that a print by reference job is to be initiated.

In this third example embodiment, the reference is resolved by the print device 306. Steps of reference resolution comprise the print device 306 examining the reference to determine the location 314 for obtaining the print content, establishing a communications link 312 over the network 308 with the location 314, obtaining the print content, and finally printing the print content in the form of document 318. The print device 306 may further perform steps of formatting the print content in accordance with the print device 306 printing capabilities. In effect, then, this third example embodiment may comprise combining the functionality of the print server 110 or 210 as described in regards to the first and second example embodiments with the print device 306.

In practice, for example, the print server functionality may be provided in the form of programmed instruction sets or circuitry components that are loaded or connected to the print device 306. By way of further example, print server logic may be encoded onto a circuit card plugged into an expansion bus of the print device 306, may be encoded into circuitry present in a chipset connected to a print device circuit, or may be contained in an executable program instruction set that is stored in a print device memory for execution by a print device processor. The dashed "box" 320 in the print device 306 is intended to illustrate a print server sub-component of the print device 306. This third example embodiment accordingly comprises additional steps of the print device 306 resolving the reference.

Also, this third example embodiment may find utility for practice where the print server functionality was of limited need. By way of example, the network location 314 may offer print content in a number of formats that correspond to different printers, with each of the formats having a different reference. A reference corresponding to the print content in a format compatible with the particular print device 306 could be obtained by the PDA 302, with that reference then passed to the print device 306. The print device 306 would then resolve the reference to obtain pre-formatted print content for output. Those knowledgeable in the art will appreciate that other circumstances may of course likewise make the practice of this third example embodiment preferred. Like the third example embodiment, the fourth example does not make use of a print server, but instead comprises direct communication between a PDA 402 and a print content location 414. Like other example embodiments, this fourth example embodiment comprises a step of the PDA 402 establishing a wireless link 404 with the print device 406, and preferably of the print device 406 acknowledging the PDA 402 over the link 404. Further steps are comprised of the PDA establishing a communications link 412 with the location 414 having the desired print content. The link 412 preferably comprises a long-range wireless communications protocol, with a cellular based radio frequency a preferred example.

In this fourth example embodiment, the reference preferably comprises a network address, and the PDA 402 itself preferably resolves the reference by communicating the reference network address to the network 408. The reference of this embodiment may comprise additional information as described in regards to other embodiments. Because the print device 406 doesn't resolve the reference in this example embodiment, the print device 406 is not required to have print server functionality. Indeed, this example embodiment may find utility for practice with substantially "standard" printers that may be obtained at relatively low cost. The printer 406 is required, of course, to have wireless capabilities for communicating with the PDA 402.

The print content is preferably streamed through the PDA 402 to the print device 406. Streaming is preferably accomplished through steps as described with reference to the second example. That is, preferably no or minimal memory resources of the PDA 402 are required. Because no print server is comprised in this example embodiment, print data is preferably pre-formatted for the particular capabilities of the print device 406. Also, additional steps may be comprised of the PDA discovering the print device 406 capabilities, and performing formatting functions. Still additionally, after a step of discovering the print device 406 capabilities, the PDA 402 may be used to select from a plurality of pre-formatted print content files at the location 414 for content that is pre-formatted to match the print device 406 capabilities.
It is noted that the example embodiments of the present invention discussed herein and illustrated with FIGS. 1-4 have referred to various steps performed by a "PDA". It will be understood that reference to a "PDA" has been made herein for purposes of example only, and that the present invention is not limited to practice with a PDA, and indeed will find utility with use of a variety of portable electronic devices. In addition to PDA's, preferred examples comprise portable computers, wireless communications devices such as radios and cellular phones, portable data terminals, and the like.

Additionally, it will be understood that although discussion herein has made reference to method steps for performance by a "print device" which has been illustrated in corresponding FIGS. with a printer, the present invention is of course not limited to use with printers. For example, the various invention embodiments will find utility when practiced with other document production apparatuses, such as copiers, facsimile machines, scanners, multi-function devices, and the like. Additionally, invention embodiments may be of utility for use with devices that do not produce documents. By way of example, invention embodiments may be used to record a print content file to a memory of a computer or the like, without production of a document. Accordingly, it will be understood that the term "printer device" as used herein is not limited to printers, but instead broadly refers to devices for producing documents and the like.

Also, it will be appreciated that the method of the present invention may be practiced as comprising additional steps of a PDA contacting a network location and downloading the reference that corresponds to the print content therefrom. Additionally, references may be available from other sources, such as stored on portable memory means. By way of example, product literature may have a reference stored on a portable memory medium that could be distributed for promotional purposes. The reference from this memory medium could be communicated to a portable device such as a PDA, with the reference then resolvable to ultimately obtain the promotional literature in printed form.
Those knowledgeable in the art will also appreciate that embodiments of the method of the invention may comprise additional steps related to facilitating billing for a print by reference process. The reference may be provided as comprising information useful for billing purposes. For example, the reference may identify a content provider, so that when processed the content provider would be able to be identified for payment. Further, identification information for the PDA user may be appended to the reference, so that when communicated and processed a user can be charged. A charge number such as a credit card or other account identifier may be required to be added to the reference by the user before the reference can be processed. Those knowledgeable in the art will appreciate that embodiments of the method of the invention may comprise many additional steps for providing data to enable billing that may generally comprise user identification, content provider identification, content identification, time of processing, and the like.

It will also be appreciated that various communications links described herein, such as links 112, 116, 212, 216, 312, and 412, although described as "direct" need not be direct point to point linkages. Indeed, it will be appreciated by those knowledgeable in the art that some forms of network communication, particularly wide networks such as the internet, generally support communications links that pass through a variety of nodes, servers, links, and the like between their origination and final destination. Accordingly, as used herein the term "direct" when applied to communications links and the like is not intended to be limited to direct point to point communications.

It will also be appreciated that the present invention may be practiced in the form of a system. Accordingly, an additional embodiment of the present invention comprises a system for printing content. With reference made once again to FIG. 1, an embodiment of a system of the invention comprises a portable device 102 linked via a wireless communications link 104 to a print device 106. The print device in turn is connectable to a network 108. The portable device 102 communicates a reference to the print device 106, with the reference indicating at least a location connectable to the network having print content. The print device 106 obtains the print content from the location, and prints the print content.
Preferably, the system further comprises a print server 110 connectable to the network, with the reference further comprising a print server address. The print device 106 then communicates the reference to the print server 110, which obtains the print content. More preferably, the print device 106 communicates print device capabilities to the print server 110, which then formats the print content for printing by the print device 106.

It will likewise be appreciated that various embodiments of the present invention lend themselves well to practice in the form of computer program products. It will therefore be understood that the present invention may comprise one or more computer program products comprising computer executable instructions embedded in a computer readable medium such as a magnetic, electronic, or optical media, that when executed by a processor in a machine cause the machine to execute various steps as described herein in reference to method embodiments. For example, an embodiment of the present invention may comprise a computer program product comprising programmable instructions residing on a printer, a PDA, a print server, and/or a network server or client computer.

The advantages of the disclosed invention are thus attained in an economical, practical, and facile manner. While preferred embodiments and example configurations have been shown and described, it is to be understood that various further modifications and additional configurations will be apparent to those skilled in the art. It is intended that the specific embodiments and configurations herein disclosed are illustrative of the preferred and best modes for practicing the invention, and should not be interpreted as limitations on the scope of the invention as defined by the appended claims.

## Claims

1. A method for a portable wireless device to print content using a print device comprising:
the portable wireless device establishing a wireless communication link with the print device;
the portable wireless device communicating a reference indicating a location of the print content; and,
the print device printing the print content from said location.

2. The method according to claim 1 wherein said location of print content comprises a network accessible site having a network address, and wherein said reference comprises at least said network address.

3. The method according to claim 1 wherein said step of the portable device communicating said reference comprises communicating said reference to the print device, and wherein the method further comprises:
the print device establishing a communications link with a print server and communicating said reference to said print server.

4. The method according to claim 3 wherein the method further comprises:
said print server discovering the capabilities of the print device and formatting the print content according to said print device capabilities.

5. A method for portable wireless device to print content according to claim 1 wherein said step of the wireless device communicating said reference further comprises the wireless device establishing a communications link with a print server and communicating said reference to said print server, and wherein the method further comprises the step of:
said print server communicating with said location of print content indicated by said reference to obtain the print content; and
the portable device communicating with said print server and with the print device to communicate the print content to the print device for printing.

6. A method for a portable device to print content according to claim 1 wherein said reference comprises at least a network address, and wherein said step of the portable device communicating said reference comprises communicating said network address to a network whereby the portable device is linked with said print content location, and wherein the method further comprises:
the portable device communicating with said location of print content indicated by said reference and communicating the print content to the print device.

7. A method for a portable device to print content according to claim 1 wherein said reference comprises a network address for a location having print content, and wherein said step of the portable device communicating said reference comprises communicating said reference to the print device, and further comprising:
the portable device establishing a connection to said location; the print device communicating with said location through the portable device obtaining the print content from said location, and transmitting the print content to the print device.

8. A method for a portable wireless device to print content using a print device of the type that is connected to a communications network, the method comprising:
the portable wireless device establishing a wireless communication link with the print device;
the print device acknowledging the portable wireless device via said wireless communication link;
the portable wireless device communicating a reference to the print device, said reference comprising at least a network address corresponding to a location in the communications network at which print content is available;
the print device establishing a server link over the network with a print server and communicating said reference to said print server;
said print server acknowledging the print device via said server link;
said print server discovering the capabilities of the print device via said server link;
said print server communicating with said location of print content indicated by said reference network address over the network to obtain the print content, formatting the print content according to said print device capabilities, and,
the print device obtaining said formatted print content from said print server and printing said formatted print content.

9. A system for obtaining print content, the system comprising:
a portable device (102, 202, 302, 402);
a print device (106, 206, 3056, 406) in communication with said portable device via a wireless communication link (104, 204, 304, 404) said print device connected to a network (108, 208, 308, 408);
a location (114, 214, 314, 414) connected to said network having print content; and,
a reference communicated from said portable device to said print device over said wireless communication link indicating said location, whereby said print device can obtain the print content over said network from said location.

10. A system for obtaining print content as in claim 9 wherein the system further comprises:
a print server (110, 210) connected to said network, whereby said print device communicates said reference to said print server and said print server obtains the print content from said location.
